# EUROPEAN PATENT APPLICATION

(11) **EP 4 831 875 A1**
(43) Date of publication of application: **28.10.2026**
(21) Application number: 26171811.8
(22) Date of filing: 13.04.2026
(51) Int. Cl.: G06N 3/0895, G06N 3/045, G06N 20/10, G06Q 30/0201, G06Q 30/0202

(54) **APPARATUS AND METHOD FOR INFERENCE USING MULTIMODAL EMBEDDING MODEL**

(30) Priority: 24.04.2025 KR 20250053673
(71) Applicant: Designovel, Pohang-si, Gyeongsangbuk-do 37666 (KR)
(72) Inventor: SHIN, Ki Young, 05571 Seoul (KR); SONG, Woo Sang, Seoul (KR)
(74) Representative: Jung, Minkyu

(57) **Abstract**

Disclosed are an apparatus and a method for inference using a multimodal embedding model which is trained by composing and generating an embedding vector for a missing or duplicated class. An inference apparatus using a multimodal embedding model according to an exemplary embodiment includes an interface configured to input target data and an instruction and an inference unit configured to apply a framework configured by a previously trained multi-dimensional vector to the target data to generate a target embedding vector and perform an input instruction based on the target embedding vector.

## Description

### BACKGROUND

### Field

The present disclosure relates to an apparatus and a method for inference using a multimodal embedding model which is trained by composing and generating an embedding vector for a missing or duplicated class.

### Description of the Related Art

A multimodal embedding model is a model which represents different types (modalities) of data in a common vector space to learn semantic correlation between various data. Generally, the multimodal embedding model is designed to receive data, such as texts, images, audios, or videos to individually extract features and map the features in the same vector space, thereby enabling comparison and search between different modalities. This model is utilized in various application fields which retrieve related images through text-based search or generate text explanation from an image.

However, when the multimodal embedding model is trained or utilized for inference and various modalities represent the same concept, a duplicated class may be generated or conversely, some classes may not be generated in any modality. In order to solve this problem, studies are necessary for a vector composition method for duplicated classes and a technique for generating a complementary embedding vector for a missing class.

### SUMMARY

An object of the present disclosure is to provide an apparatus and a method for inference using a multimodal embedding model which is trained by composing and generating an embedding vector for a missing or duplicated class.

According to an aspect, an inference apparatus using a multimodal embedding model includes an interface configured to input target data and an instruction and an inference unit configured to apply a framework configured by a previously trained multi-dimensional vector to the target data to generate a target embedding vector and perform an input instruction based on the target embedding vector.

The inference unit compares a similarity between the target embedding vector and a stored data embedding vector which is previously generated through the framework.

The inference unit extracts one or more stored data embedding vectors based on the similarity and generates output data based on the extracted stored data embedding vector and the instruction.

The framework is trained by applying an embedding vector generated from learning data including a plurality of modality data to the framework according to a predetermined rule.

The framework is trained by applying an embedding vector generated for each of the plurality of modality data to a class vector space for each of the plurality of modality data.

The framework is trained by applying the generated embedding vector to a class vector space for each of the plurality of modality data for a non-duplicated class depending on whether an embedding vector of different types of modality data is duplicated in a predetermined class.

When a predetermined class is duplicated, the framework is trained by composing embedding vectors of different types of modality data corresponding to the duplicated class and then applying it to a class vector space.

When there is a missing class, among the plurality of modality data, the framework is trained based on an embedding vector for the missing class which is generated using one or more estimation models trained to estimate an embedding vector for the missing class based on modality data or an embedding vector for one or more classes other than the missing class.

According to an aspect, an inference method using a multimodal embedding model which is carried out on a computing device including one or more processors and a memory which stores one or more programs executed by the one or more processors includes a step of receiving target data and an instruction and an inference step of applying a framework configured by a previously trained multi-dimensional vector to the target data to generate a target embedding vector and performing an input instruction based on the target embedding vector.

In the inference step, a similarity between the target embedding vector and a stored data embedding vector which is previously generated through the framework is compared.

In the inference step, one or more stored data embedding vectors are extracted based on the similarity and output data is generated based on the extracted stored data embedding vector and the instruction.

An inference apparatus according to an exemplary embodiment effectively solves a duplicated and missing class problem to improve an accuracy of search, recommendation, and generation models and provide more reliable inference result in various application fields.

### BRIEF DESCRIPTION OF THE DRAWINGS

The above and other aspects, features and other advantages of the present disclosure will be more clearly understood from the following detailed description taken in conjunction with the accompanying drawings, in which:
FIG. 1 is a diagram of a configuration of an inference apparatus using a multimodal embedding model according to an exemplary embodiment;
FIG. 2 is an exemplary view for explaining a multi-dimensional vector space framework according to an example;
FIG. 3 is an exemplary view for explaining an inference unit according to an exemplary embodiment;
FIG. 4 is a diagram of a configuration of a multimodal embedding model training apparatus according to an exemplary embodiment;
FIG. 5 is an exemplary view for explaining a model training unit according to an exemplary embodiment;
FIGS. 6 to 8 are exemplary views for explaining an operation method of a multimodal embedding model training apparatus according to an example; and
FIG. 9 is a flowchart illustrating an inference method using a multimodal embedding model according to an exemplary embodiment.

### DETAILED DESCRIPTION OF THE EMBODIMENT

Hereinafter, an exemplary embodiment of the present disclosure will be described in detail with reference to the accompanying drawings. In the description of the present disclosure, a detailed description of known configurations or functions incorporated herein will be omitted when it is determined that the detailed description may make the subject matter of the present disclosure unclear. Further, the terms to be described below are defined considering the functions in the present disclosure and may vary depending on the intention or usual practice of a user or operator. Accordingly, the terms need to be defined based on details throughout this specification.

Hereinafter, exemplary embodiments of an inference apparatus using a multimodal embedding model and a method thereof will be described in detail with reference to drawings.

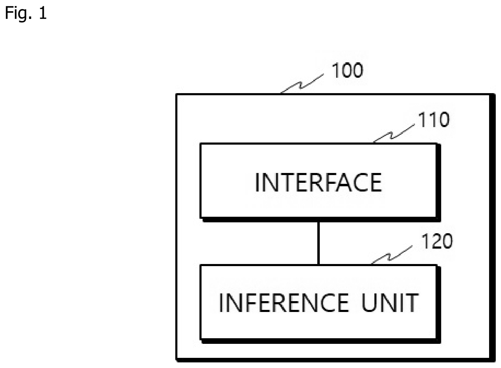

FIG. 1 is a diagram of a configuration of an inference apparatus using a multimodal embedding model according to an exemplary embodiment.

According to an exemplary embodiment, an inference device 100 using a multimodal embedding model includes an interface 110 configured to input target data and an instruction and an inference unit 120 configured to apply a framework configured by previously trained multi-dimensional vector to the target data to generate a target embedding vector and perform the input instruction based on the target embedding vector.

A multimodal embedding model is a model which represents different types (modalities) of data in a common vector space to learn semantic correlation. The multimodal embedding model receives various modality data, such as texts, images, audios, and videos to extract a feature of each data and then convert the feature into the same embedding space to perform comparison and search. To this end, learning data including two or more types of modality data, among texts, images, audios, videos, and time series information, may be used. By doing this, the multimodal embedding model may perform an operation of finding an image which is the most semantically similar to a specific text or generating a sentence which describes the contents based on an audio signal.

For example, the time series data refers to data which changes over time and represents a sales volume change, fashion trend, and changes in consumer feedback for a specific period in the apparel industry. For example, a seasonal clothing sales volume may show specific patterns according to temperature or climate variations and consumer responses tend to sharply increase or decrease whenever new products of a specific brand is released. The time series data is analyzed so that the clothing brand predicts a consumer demand during a specific season or event (for example, Black Friday and year-end sale) and optimizes its inventory management. Further, it may help identify long-term patterns to predict upcoming seasonal trends and catch repeated trends.

For example, the multimodal embedding model operates to extract a feature for each modality and then compose the features in a common semantic space. To this end, a neural network structure, such as CNN, RNN, or transformer, is utilized and a contrastive learning or self-supervised learning technique is used to learn the correlation between different modalities.

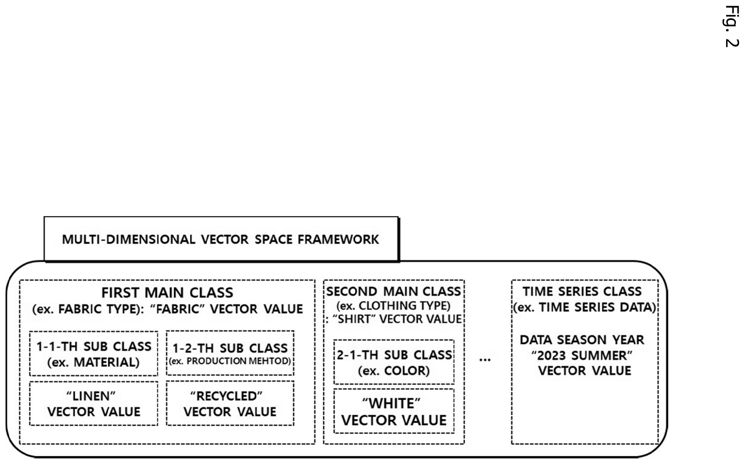

FIG. 2 illustrates a framework configured by a multi-dimensional vector. For example, the framework may have a structure classified into a main class and a sub class. The framework sets a specific concept (for example, a fabric type, a clothing type, and time series information) as a main class and subdivides the specific concept to expand to a sub class. For example, with respect to a material, an individual attribute, such as "linen", may be defined as a sub class and each sub class has a unique vector value. By doing this, a relationship between concepts is quantitatively represented and the similarity may be analyzed through vector operations.

Further, the framework includes a plurality of main classes and each main class is independently operated, but entirely forms a vector space in which the main classes are connected to each other. For example, various main classes, such as "clothing type" or "time series information" as well as "fabric type" may be defined and a sub class is configured in each class to assign an individual vector value. When this structure is utilized, vectors having specific attributes (for example, a product which is formed of linen and is produced by a recycling process) are combined to perform more sophisticated search, recommendation, and classification tasks.

According to the exemplary embodiment, the inference unit 120 compares a similarity between the target embedding vector and a stored data embedding vector which is previously generated through the framework.

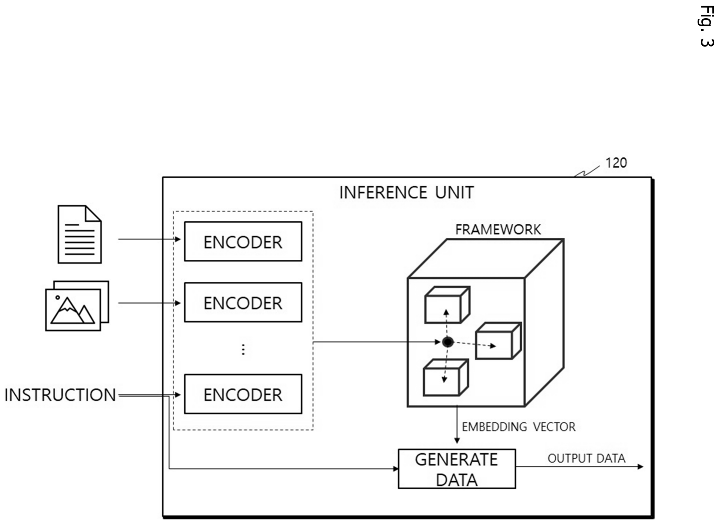

Referring to FIG. 3, the inference unit 120 comparers the similarity between the input target embedding vector and an embedding vector of stored data which is previously learned through the framework to analyze the correlation with a specific class or an entity. For example, when a user searches for a specific fashion item (for example, a "black leather jacket"), the corresponding text data is converted into the embedding vector and the most similar vector may be found by comparing with previously stored data in the trained vector space. During this process, the inference unit 120 performs a predetermined similarity measurement operation between a vector of the input target data and a vector of the existing data to be comparable, thereby more accurately providing a result desired by the user.

The inference unit 120 compares an embedding vector of the framework for the target data and a trained vector space to identify classes or entities having a similarity which is equal to or higher than a threshold value. For example, when the user inputs a text "spring-trench coat", an embedding vector of the corresponding sentence is generated and then a similarity with vectors of previously stored related data is calculated. If specific vectors have a similarity which exceeds a predetermined similarity threshold, the inference unit 120 outputs product information (for example, a brand, a color, and a price) corresponding to the vector. This process is also applied to various modality data including an image and time series data such as a price variation pattern, as well as the text, in the same way.

The extracted similar embedding vector will be utilized as base data for executing the instruction of the user. For example, the inference unit 120 identifies a specific similar embedding vector and then generates information about image generation and product search or recommendation based on the corresponding information. For example, when a user searches for "vintage style bag", the inference unit 120 searches for a product having the most similar design from the trained vector space or generates information about a new style of bag based on the existing data.

According to an exemplary embodiment, the inference unit 120 extracts one or more stored data embedding vectors based on the similarity and generates output data based on the extracted stored data embedding vector and the instruction.

The inference unit 120 converts the input target data and instruction into an embedding vector and then extracts and analyzes the most similar stored data embedding vector from the trained vector space. For example, when a user inputs a specific clothing image and related text data, and then inputs an instruction saying that "recommend next season's trending products", the inference unit 120 vectorizes the input image and the vector data in accordance with the modalities to generate a target embedding vector. Next, the inference unit 120 compares the similarity between the target vector and the previously stored data vector in the trained vector space and extracts one or more stored data embedding vectors having a high similarity.

The extracted similar vectors may be utilized as key information for predicting next season's fashion trends. For example, when input target data reflects "currently popular street fashion style", the inference unit 120 analyzes a pattern in the past data where similar styles were trending and identifies stored data having the similar vector to recommend styles having similar patterns which are highly likely to be repeated in the upcoming season. This analysis may include various time series data, such as sales volume changes, SNS trends, and releasing cycle of major brands and products with a high likelihood of becoming trends may be selected by considering these elements.

For example, the inference unit 120 generates optimal output data based on the extracted similar vector and the input instruction. For example, when a trending product to be recommended is image data, previously stored product images of similar styles are combined to visually present a new fashion trend with a high likelihood of becoming trends. Alternatively, the generative model is utilized to propose a new product design to which a trending style is reflected. If a recommendation result is a text based result, text information such as "styles with a high likelihood of becoming trends in a next season: oversized jackets, neutral-tone colors, vintage denim combinations" is generated. As described above, the inference unit 120 analyzes similar datasets by utilizing the input target data and instructions and generates an optimal result based thereon.

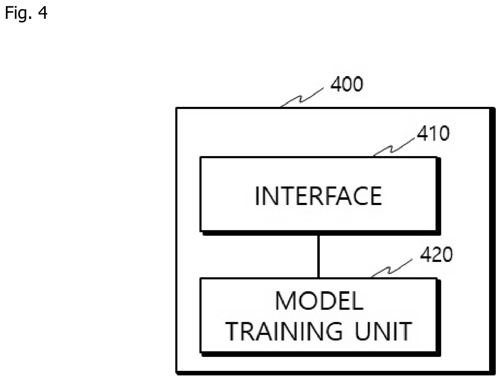

FIG. 4 is a diagram of a configuration of a multimodal embedding model training apparatus according to an exemplary embodiment.

According to an exemplary embodiment, the multimodal embedding model training apparatus 400 includes an interface 410 configured to input and output data and a model training unit 420 configured to learn a framework by applying an embedding vector generated from learning data including a plurality of modality data to the framework configured by a multi-dimensional vector according to a predetermined rule.

According to the exemplary embodiment, the model training unit 420 generates an embedding vector for each of the plurality of modality data and applies an embedding vector generated in the class vector space for each of the plurality of modality data.

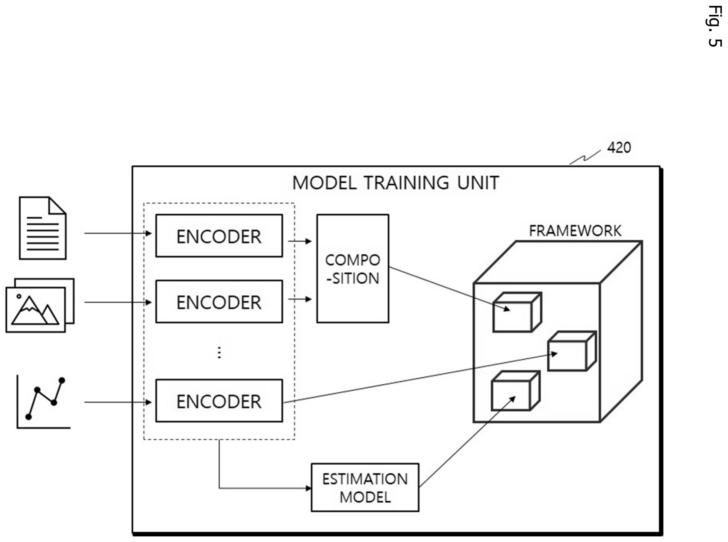

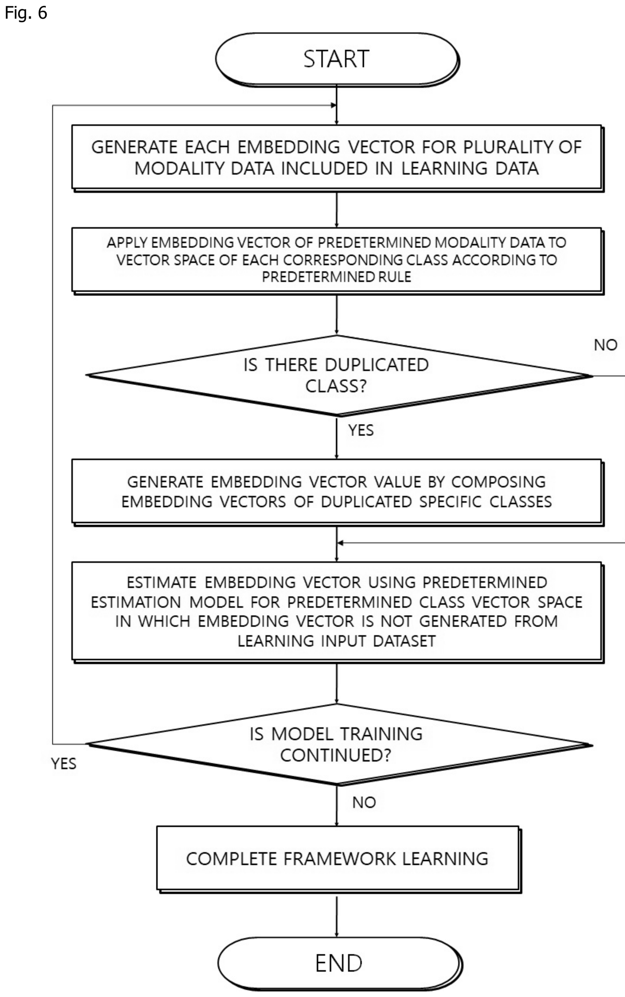

Referring to FIGS. 5 and 6, the model training unit 420 includes an encoder which extracts a feature from different types (modalities) of data and converts the feature into a vector. For example, a transformer based language model may be used to vectorize text data and an encoder such as CNN or vision transformer (ViT) is used to generate an embedding vector for image data. Further, a spectrogram is analyzed by a RNN or CNN based model to obtain vector representation for the audio data. The embedding vector generated as described above includes a semantic representation for each modality data and data representing the same concept may be configured to have correlation in the common vector space.

According to an exemplary embodiment, the model training unit 420 applies an embedding vector generated in a class vector space for each of the plurality of modality data to a non-duplicated class, depending on whether the embedding vector of different types of modality data is duplicated in a specific class. In contrast, when a predetermined class is duplicated, the model training unit 420 composes an embedding vector of modality data for a different type corresponding to the duplicated class and then applies the embedding vector to the class vector space.

According to an example, when the multimodal embedding model is trained, embedding vectors generated in different modalities may represent the same class in some cases. For example, when a vector representing a concept of "red dress" is independently trained in a text, an image, and an audio, the vectors may be duplicated or may be dispersed. In this case, it is necessary to adjust the embedding vectors representing the same class so as not to be excessively dispersed and for this purpose, vector composition may be performed.

For example, the vector composition may generally use affine transformation, weighted average, and attention based fusion techniques. Vectors related to a specific class are aligned so as not to be excessively separated in the same vector space and by doing this, data having the same meaning may have more consistent representation.

For example, the model training unit 420 serves to apply the embedding vector extracted from different modality data to the class vector space. During this process, there may be cases in which only one modality is provided or various modality data are duplicated for a specific class and the vector application methods may vary depending on the cases.

For example, when the modality data is not duplicated, an embedding vector of an individual modality may be directly applied to the corresponding class vector space. For example, when for a "fabric material" class, text data exists, but image data does not exist, an embedding vector generated based on the text data may be applied to the corresponding class vector space as it is. In this case, when the model learns image data later, the model expands a vector space while learning a relationship with the existing text vector.

In contrast, when different modality data simultaneously exist in a specific class, the embedding vectors generated in each modality are not individually applied, but are subject to a composition process to generate one representative vector and then the representative vector is applied to the class vector space. For example, when both text data and image data exist for a "fabric material" class, the model training unit 420 composes an embedding vector extracted from the text data and an embedding vector extracted from the image data to generate one final vector. During this composition process, an attention mechanism or affine transformation may be utilized as well as a simple averaging method and the generated vector may be adjusted to have a semantically consistent representation in the class vector space. By doing this, the model training unit 420 effectively combines various modality data representing the same concept and minimizes inconsistency due to the data redundancy.

According to the exemplary embodiment, the model training unit 420 generates an embedding vector for a missing class using one or more estimation models trained to estimate an embedding vector for the missing class based on modality data or an embedding vector for one or more classes other than the missing class.

According to an example, when the multimodal embedding model is trained, information of a specific class may be missed from the learning data. For example, a concept of "clothing type" may be included in the text and image modalities, but there may be no information about "material" In this case, the model does not have a chance to directly learn the information regarding the "material" so that the corresponding concept may not be appropriately represented in the vector space.

Accordingly, it is necessary to complement the missing class information by utilizing given learning data. For example, an embedding vector which is the most similar to the corresponding concept may be generated or inferred by utilizing text and image vectors of "clothing type" trained in the existing modality.

According to an example, when an embedding vector of a specific class is not generated, the model training unit 420 may estimate an embedding vector of the missing class by utilizing the modality data or the embedding vector of the other related class. To this end, one or more estimation models are utilized to learn a pattern from the existing data and generate a vector which complements the missing information.

For example, as a result of analyzing the text data and the image data, if the class embedding vector for "detailed material" is not generated, the vector for the "detailed material" may be generated by utilizing modality data or an embedding vector for a "material" which is a superclass or a "clothing type" which is another main class. For example, even though there are information, such as "cotton", "silk", and "polyester", in the "material" class, if information such as "organic cotton" or "microfiber" corresponding to the "detailed" material is missing, a vector of the missing "detailed material" may be generated based on a pattern extracted from the existing "material" data. Further, when a context in which a specific material is mainly used is learned by analyzing data, such as "sportswear", "suit", and "casual" in the "clothing type" class, the "detailed material" information may be more elaborately complemented.

In order to generate an embedding vector of the missing "detailed material" class, various techniques may be applied. For example, in order to generate the embedding vector of the missing "detailed material" class, algorithms, such as PCA (principal component analysis), VAE (variational autoencoder), LLM (large language model) and the like, may be applied. For example, the PCA (principal component analysis) analyzes principal components of the existing class embedding vectors to estimate the missing vector based on the patterns of the existing vectors. The VAE (variational autoencoder) learns the distribution of data during a process of compressing data in a lower-dimensional space and then restoring the data again to generate a new vector. The LLM (large language model) learns massive text data to identify the semantic relationship and generate an embedding vector having a newly introduced concept.

According to the exemplary embodiment, the model training unit 420 determines confidence value for each class based on whether an embedding vector is generated from the learning data or is generated from the estimation model.

According to an example, the embedding vector directly extracted from the learning data is based on actual data so that the reliability thereof may be high. In contrast, the embedding vector which is complementarily generated by the estimation model is a prediction value based on the existing data pattern so that a reliability thereof may be relatively low. For example, when the embedding vector for a material "polyester" is directly generated from the learning data, a confidence value may be set to be high. However, when the embedding vector for a detailed material "microfiber" is inferred from another data, the confidence value of the vector may be assigned to be relatively low.

When the model is consistently trained, the confidence value may be utilized to adjust the balance between new data and the existing data. For example, when new learning data is added as the training progresses, it may be evaluated whether to be complemented through new data as compared with the existing estimated vector having a low confidence. If the new data has the high similarity to the existing estimated vector, the confidence of the vector is gradually increased to increase the reliability. In contrast, when there is a big difference between the new data and the existing estimated vector, the model may be trained to correct or complement the vector.

By doing this, when the confidence is utilized, during the model training process, a more elaborated feedback loop may be constructed. Initially, the confidence of the estimated vector may be set to be low due to insufficient data. However, as actual data is added through the consistent training, the confidence is gradually adjusted. Further, when a confidence for a specific class is maintained below a predetermined level, a strategy of collecting additional learning data by reviewing the corresponding class or applying a more elaborated estimation technique may be considered. By doing this, the model constructs a more reliable vector space and maintains a learning structure which is consistently improved.

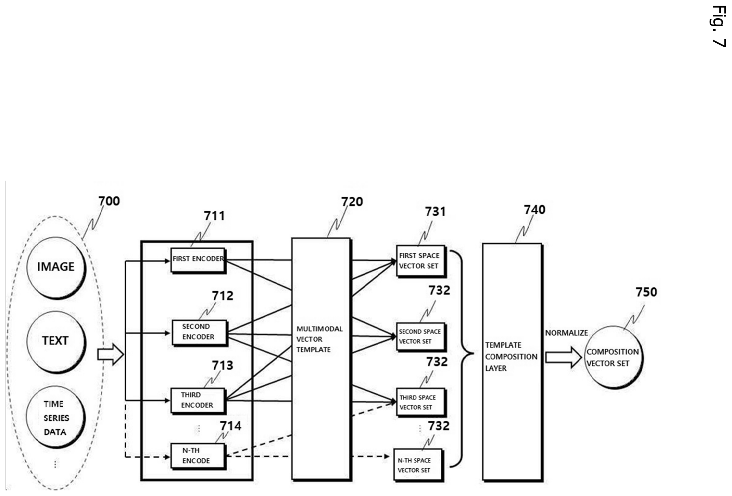

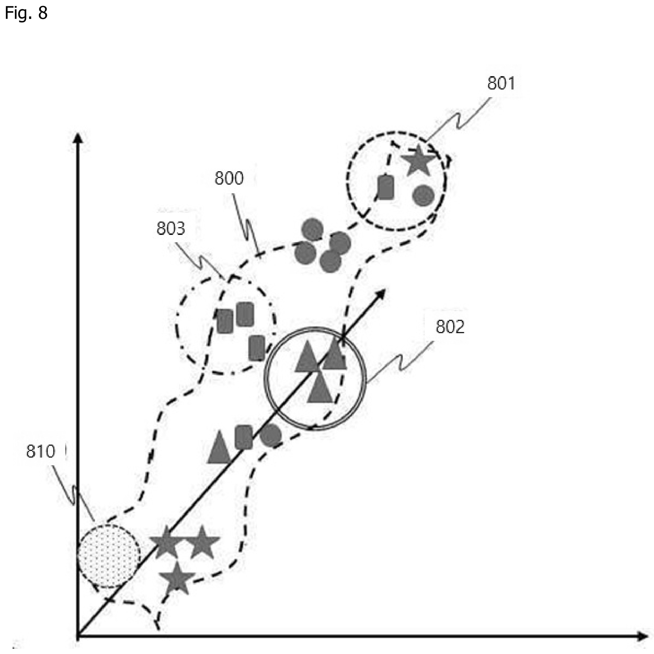

FIGS. 7 and 8 are exemplary views for explaining an operation method of a multimodal embedding model training apparatus according to an example.

FIG. 7 is an example for explaining a multimodal embedding model training method according to an example. Referring to FIG. 7, the multimodal embedding model training apparatus 400 receives various multimodal data, which includes at least one of time series data, such as a crawling timestamp, a number of recommendations of fashion products on a webpage, sales volume information, and price information as well as images, texts, and image-text hybrid data.

When a modality 500 is input, the model training unit 420 embeds each modality using at least one encoder 711, 712, 713, or 714. For example, when the modality is an image, the encoder 711 serves as an image encoder, when the modality is a text, the encoder 512 serves as a text encoder and when the modality is a number (time series data), the encoder 513 may analyze the number.

The modality 700 described in FIG. 7 is a training dataset for training a model and the model training unit 420 may vectorize the modality to be disposed in a structured space.

FIG. 8 is a conceptual view of a framework according to an exemplary embodiment of the present disclosure. Referring to FIG. 8, the framework is represented as a multi-dimensional vector space and the model training unit 420 applies a result obtained by vectorizing each modality (700) data to a plurality of predetermined spaces 801, 802, and 803.

For example, when product attribute information of a specific fashion product is encoded, the first encoder 711 vectorizes detailed information about the product attribute by analyzing "a text modality" to be filled in the spaces 801 and 802 of FIG. 8. In the similar way, the second encoder 712 analyzes an image modality to vectorize the corresponding attribute to be filled in the spaces 802 and 803. In this way, the model training unit 420 maps various product attribute information to the framework 800. For example, as illustrated in FIG. 2, in the framework, each class is mapped to individual spaces and a vector value of a "material" attribute belonging to the first main class is filled in the space 802 and a "color" attribute is disposed in the space 801.

In FIG. 8, it is described that a specific space remains as an empty space 810. For example, the model training unit 420 may generate a new vector value based on a vector value which is previously stored to fill the empty space 810. For example, virtual review data is generated based on a language model and is embedded to be applied to the space 810.

For example, when different modalities (for example, a text and an image) based vectors are duplicated in the same space 802, the model training unit 420 finally selects a vector value having a high reliability according to a predetermined priority. Alternatively, a weight is applied based on the reliability score to compose the vector values. A template composition layer 740 which performs this process composes and normalizes a plurality of vectors to generate a final composed vector set 750.

When a specific class is missing in a framework of a multimodal embedding model, but is not estimated to be complemented from the existing data, the corresponding class information may be processed to be null and an alternative method may be applied. For example, there is no embedding vector for the "detailed material" and cannot be estimated based on another class (for example, a "material" or a "clothing type"), the vector space of the corresponding class is left empty (or set to a null value) or a specific default value is assigned. At this time, the default value may be obtained by utilizing a mean vector of other classes having similar attributes or may utilize a previously defined embedding vector as an alternative value. For example, when a "color" class is missing, not the entire color information is processed to be null, but is set as a "basic color".

The model reflects new learning data by means of the iterative training to update the missing class. That is, even though in an initial training step, the embedding vector is not generated due to insufficient data of a specific class, new learning data is added to gradually complement the corresponding class. For example, even though a vector is not initially generated due to insufficient data about the "detailed material" if new product data is added thereafter to ensure example data having the corresponding attribute, a new embedding vector may be generated based thereon.

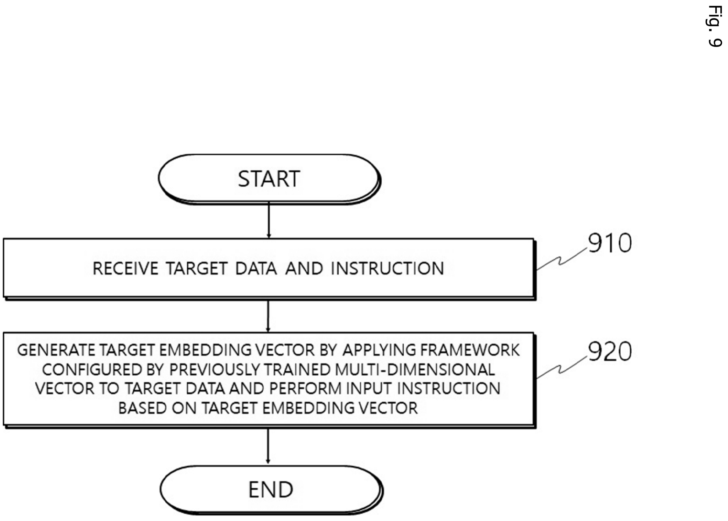

FIG. 9 is a flowchart illustrating an inference method using a multimodal embedding model according to an exemplary embodiment.

According to an exemplary embodiment, the inference apparatus using a multimodal embedding model may be a computing device including one or more processors and a memory which stores one or more programs executed by one or more processors.

According to an exemplary embodiment, an inference apparatus using a multimodal embedding model receives target data and an instruction in step 910 and applies a framework configured by previously trained multi-dimensional vector to the target data to generate a target embedding vector and perform the input instruction based on the target embedding vector.

Among the embodiments of FIG. 9, embodiments that overlap the contents described with reference to FIGS. 1 to 8 are omitted.

An aspect of the present disclosure may also be implemented as computer-readable codes written on a computer-readable recording medium. Codes and code segments which implement the program may be easily deducted by a computer programmer in the art. The computer readable recording medium includes all kinds of recording devices in which data, which are capable of being read by a computer system, are stored. Examples of the computer-readable recording media include ROM, RAM, CD-ROM, magnetic tape, floppy disk, optical disk and the like. Further, the computer readable recording medium is distributed in computer systems connected through a network to be written and executed with a computer readable code in a distributed manner.

For now, the present disclosure has been described with reference to the exemplary embodiments. It is understood to those skilled in the art that the present disclosure may be implemented as a modified form without departing from an essential characteristic of the present disclosure. Accordingly, the scope of the present disclosure is not limited to the above-described embodiment, but should be construed to include various embodiments within the scope equivalent to the description of the claims.

## Claims

1. An inference apparatus using a multimodal embedding model, comprising:
an interface configured to input target data and an instruction; and
an inference unit configured to apply a framework configured by a previously trained multi-dimensional vector to the target data to generate a target embedding vector and perform an input instruction based on the target embedding vector.

2. The inference apparatus using a multimodal embedding model according to claim 1, wherein the inference unit compares a similarity between the target embedding vector and a stored data embedding vector which is previously generated through the framework.

3. The inference apparatus using a multimodal embedding model according to claim 2, wherein the inference unit extracts one or more stored data embedding vectors based on the similarity and generates output data based on the extracted stored data embedding vector and the instruction.

4. The inference apparatus using a multimodal embedding model according to any one claims 1 to 3, wherein the framework is trained by applying an embedding vector generated from learning data including a plurality of modality data to the framework according to a predetermined rule.

5. The inference apparatus using a multimodal embedding model according to any one of claims 1 to 4, wherein the framework is trained by applying an embedding vector generated for each of the plurality of modality data to a class vector space for each of the plurality of modality data.

6. The inference apparatus using a multimodal embedding model according to claim 5, wherein the framework is trained by applying the generated embedding vector to a class vector space for each of the plurality of modality data for a non-duplicated class depending on whether an embedding vector of different types of modality data is duplicated in a predetermined class.

7. The inference apparatus using a multimodal embedding model according to claim 6, wherein when a predetermined class is duplicated, the framework is trained by composing embedding vectors of different types of modality data corresponding to the duplicated class and then applying it to a class vector space.

8. The inference apparatus using a multimodal embedding model according to claim 6 or 7, wherein when there is a missing class, among the plurality of modality data, the framework is trained based on an embedding vector for the missing class which is generated using one or more estimation models trained to estimate an embedding vector for the missing class based on modality data or an embedding vector for one or more classes other than the missing class.

9. An inference method using a multimodal embedding model which is carried out on a computing device including one or more processors and a memory which stores one or more programs executed by the one or more processors, the method comprising:
a step of receiving target data and an instruction; and
an inference step of applying a framework configured by a previously trained multi-dimensional vector to the target data to generate a target embedding vector and performing an input instruction based on the target embedding vector.

10. The inference method using a multimodal embedding model according to claim 9, wherein in the inference step, a similarity between the target embedding vector and a stored data embedding vector which is previously generated through the framework is compared.

11. The inference method using a multimodal embedding model according to claim 10, wherein in the inference step, one or more stored data embedding vectors are extracted based on the similarity and output data is generated based on the extracted stored data embedding vector and the instruction.

12. The inference method using a multimodal embedding model according to any one of claims 9 to 11, wherein the framework is trained by applying an embedding vector generated from learning data including a plurality of modality data to the framework according to a predetermined rule.

13. The inference method using a multimodal embedding model according to any one of claims 9 to 12, wherein the framework is trained by applying an embedding vector generated for each of the plurality of modality data to a class vector space for each of the plurality of modality data.

14. The inference method using a multimodal embedding model according to claim 13, wherein the framework is trained by applying the generated embedding vector to a class vector space for each of the plurality of modality data for a non-duplicated class depending on whether an embedding vector of different types of modality data is duplicated in a predetermined class.

15. The inference method using a multimodal embedding model according to claim 14, wherein when a predetermined class is duplicated, the framework is trained by composing embedding vectors of different types of modality data corresponding to the duplicated class and then applying it to a class vector space.
